# EUROPÄISCHE PATENTSCHRIFT

(11) **EP 1 605 747 B1**
(45) Veröffentlichungstag und Bekanntmachung des Hinweises auf die Patenterteilung: **17.01.2007**
(21) Anmeldenummer: 03773323.5
(22) Anmeldetag: 04.11.2003
(51) Int. Cl.: A01C 17/00, E01C 19/20

(54) **VORRICHTUNG ZUM AUSBRINGEN EINES RIESEL- BZW. STREUFÄHIGEN MATERIALS**
DEVICE FOR DISCHARGING A POURABLE OR SPRINKABLE MATERIAL
DISPOSITIF POUR DEBITER UNE MATIERE APTE A L'ECOULEMENT OU AU DISPERSEMENT

(30) Priorität: 25.03.2003 AT 206032003
(43) Veröffentlichungstag der Anmeldung: 21.12.2005
(73) Patentinhaber: Schöls, Jürgen, 3753 Dallein (AT)
(72) Erfinder: Schöls, Jürgen, 3753 Dallein (AT)
(74) Vertreter: Miksovsky, Alexander
(86) Internationale Anmeldenummer: PCT/AT2003/000329
(87) Internationale Veröffentlichungsnummer: WO 2004/084617

(56) Entgegenhaltungen:
- CH-A- 333 113
- DE-A- 2 843 487
- DE-A- 19 829 782
- DE-A- 19 908 141

## Beschreibung

Die vorliegende Erfindung bezieht sich auf eine Vorrichtung zum Ausbringen eines riesel- bzw. streufähigen Materials, beispielsweise von Saatgut, Dünger, Salz, Ölbindemittel oder ähnlichen Granulaten, mit einem Vorratsbehälter, aus welchem das Material über wenigstens eine insbesondere verschließbare Austragsöffnung auf zwei scheiben- bzw. tellerartige Verteileinrichtungen, insbesondere unter Einfluß der Schwerkraft, ausbringbar ist, wobei die Verteileinrichtungen zu einer rotierenden Bewegung durch wenigstens einen Elektromotor antreibbar sind.

Im Zusammenhang mit derartigen Vorrichtungen zum Ausbringen eines riesel- bzw. streufähigen Materials, beispielsweise von Saatgut oder Dünger, sind unterschiedliche Ausführungsformen bekannt, wobei in diesem Zusammenhang beispielsweise auf die DE-A 198 29 782, die DE-A 195 13 423, die DE-C 42 37 141, die DE-A 101 26 233, die DE 199 08 141, die EP-A 1 020 565, die DE-U 201 17 007 oder die EP-A 1 129 608 verwiesen wird. Bei diesen bekannten Ausführungsformen findet in der überwiegenden Mehrzahl jeweils eine teller- bzw. scheibenartige Verteileinrichtung Verwendung, welche beispielsweise über eine Zapfwelle eines entsprechenden Fahrzeugs zur Halterung der Vorrichtung oder einen getrennten Elektromotor angetrieben wird. Nachteilig bei derartigen mit einer einzigen Verteileinrichtung bzw. einem einzigen Streuer ausgebildeten Vorrichtungen ist insbesondere die Tatsache, daß eine qualitativ zufriedenstellende Verteilung des auszubringenden, riesel- bzw. streufähigen Materials, beispielsweise von Saatgut oder Dünger, nur in einer geringen Breite möglich ist. Falls bei derartigen Vorrichtungen mit lediglich einer Streuvorrichtung versucht werden sollte, größere Bereiche bzw. Breiten zu überstreichen, ist davon auszugehen, daß sich insbesondere in Randbereichen eine ungleichmäßige bzw. uneinheitliche Verteilung des auszubringenden Materials ergibt, so daß kein zufriedenstellendes Ergebnis erzielbar ist.

Zur wenigstens teilweisen Behebung von derartigen, mit lediglich einer scheiben- bzw. tellerartigen Verteileinrichtung versehenen Vorrichtung zum Ausbringen eines riesel- bzw. streufähigen Materials wurden Vorrichtungen vorgeschlagen, bei welchen über ein Verteilergetriebe ausgehend von einer Zapfwelle im wesentlichen zwei nebeneinander liegende Verteileinrichtungen antreibbar sind, so daß beispielsweise eine Erhöhung der Breite von auszubringendem Material mit einer derartigen Vorrichtung erzielbar ist. Nachteilig bei diesen bekannten Ausführungsformen ist jedoch die Tatsache, daß eine derartige Vorrichtung nur an speziellen Fahrzeugen, beispielsweise einem Traktor, welche über eine Abtriebsmöglichkeit mittels einer Zapfwelle verfügen, verwendet werden kann, wobei naturgemäß keinerlei Freiheiten im Hinblick auf eine Festlegung bzw. Orientierung einer derartigen Vorrichtung an einem derartigen Fahrzeug zur Verfügung stehen. Weiters ist beispielsweise aus der DE-A 28 43 487 eine Ausführungsform einer Streumaschine der eingangs genannten Art bekannt geworden, bei welcher zwei über einen Elektromotor angetriebene Streuscheiben vorgesehen sind.

Die vorliegende Erfindung zielt nunmehr darauf ab, eine Vorrichtung der eingangs genannten Art zum Ausbringen von riesel- bzw. streufähigem Material dahingehend weiterzubilden, daß neben einer Erzielung eines verbesserten Ausbringens des riesel- bzw. streufähigen Materials auch eine Festlegung einer erfindungsgemäßen Vorrichtung an unterschiedlichsten Fahrzeugen, insbesondere unabhängig von einer Zapfwelle eines entsprechenden Spezialfahrzeugs, möglich wird.

Zur Lösung dieser Aufgaben ist eine Vorrichtung der eingangs genannten Art im wesentlichen dadurch gekennzeichnet, daß die Verteileinrichtungen jeweils mit einem getrennten, von einem Elektromotor gebildeten Antrieb gekoppelt sind und daß die von jeweils einem Elektromotor gebildeten Antriebe der Verteileinrichtungen getrennt regel- bzw. steuerbar sind. Dadurch, daß erfindungsgemäß zwei Verteileinrichtungen jeweils mit einem getrennten, von einem Elektromotor gebildeten Antrieb gekoppelt sind, wird es möglich, ein entsprechend verbessertes Ausbringen des riesel- bzw. streufähigen Materials zu ergeben, da größere Breiten bzw. Arbeitsbreiten bei verbesserter Verteilungsqualität überstrichen werden können. Darüber hinaus wird es durch die erfindungsgemäß vorgeschlagene Verwendung von getrennten Elektromotoren für jede der zwei Verteileinrichtungen möglich, die erfindungsgemäße Vorrichtung unabhängig von einem Vorsehen einer Zapfwelle an einem entsprechenden Spezialfahrzeug an einer Vielzahl von Fahrzeugen festzulegen, so daß der Einsatzbereich der erfindungsgemäßen Vorrichtung stark vergrößert und verbessert wird. Darüber hinaus ergeben sich entsprechend erhöhte Freiheiten bzw. Konstruktionsmöglichkeiten betreffend das Vorsehen einer gegebenenfalls erforderlichen Trag- bzw. Festlegungsanordnung für die erfindungsgemäße Vorrichtung an einem Fahrzeug. Durch die erfindungsgemäß mögliche Verbesserung bzw. Vergrößerung der Arbeitsbreite sowie verbesserte Verteilungsqualität läßt sich nicht nur mit verringertem Arbeits- bzw. Zeitaufwand das riesel- bzw. streufähige Material ausbringen, sondern es lassen sich auch Einsparungen beim riesel- bzw. streufähigen Material erzielen. Für eine weitere Verbesserung der Verteilungsqualität wird erfindungsgemäß zusätzlich vorgeschlagen, daß die von jeweils einem Elektromotor gebildeten Antriebe der Verteileinrichtungen getrennt regel- bzw. steuerbar sind. Durch eine derartige, getrennte Regel- bzw. Steuerbarkeit der jeweils von einem Elektromotor gebildeten Antriebe der Verteileinrichtungen läßt sich beispielsweise für den Fall, daß lediglich Teilbereiche mit dem auszubringenden, riesel- bzw. streufähigen Material zu versorgen sind, dies in einfacher Weise steuern, so daß wiederum der Materialeinsatz minimiert bzw. optimiert werden kann.

Gemäß einer weiters bevorzugten Ausführungsform wird erfindungsgemäß vorgeschlagen, daß ein Sensor zur Feststellung der angehobenen oder abgesenkten Lage der an einem Fahrzeug festgelegten Vorrichtung vorgesehen ist, welcher mit einem Verschiebeantrieb zum Öffnen und Schließen der Austragsöffnung des Vorratsbehälters und/oder einer Leistungszufuhr zu den Elektromotoren koppelbar ist. Ein derartigen Sensor zur Feststellung der angehobenen oder abgesenkten Lage bzw. der Einsatzposition der erfindungsgemäßen Vorrichtung ermöglicht selbsttätig eine Unterbrechung einer weiteren Materialzufuhr, beispielsweise bei einem Wendevorgang bzw. einem Feldwechsel, wobei erfindungsgemäß entweder die Austragsöffnung aus dem Vorratsbehälter entsprechend verschlossen oder durch Unterbrechung der Leistungszufuhr zu den Elektromotoren ein weiteres Ausbringen von Material aus der erfindungsgemäßen Vorrichtung unterbunden wird. Der Schieber bzw. Verschiebeantrieb kann beispielsweise eine elektronische Regelung bzw. Steuerung insbesondere für eine prozentweise Einstellung einer Öffnung in einem Bereich von 0 bis 100 aufweisen.

Für eine weitere Optimierung der Menge des auszubringenden, riesel- bzw. streufähigen Materials wird darüber hinaus vorgeschlagen, daß ein Sensor zur Feststellung der Geschwindigkeit des die Vorrichtung tragenden Fahrzeugs vorgesehen ist, welcher mit einem Verschiebeantrieb zum Öffnen und Schließen der Austragsöffnung des Vorratsbehälters und/oder einer Regelung der Drehzahl der Elektromotoren der Verteileinrichtungen koppelbar ist, wie dies einer weiters bevorzugten Ausführungsform der erfindungsgemäßen Vorrichtung entspricht. Ein derartiger Sensor kann beispielsweise mit einer Einrichtung bzw. Vorrichtung zur Ermittlung der Geschwindigkeit des Fahrzeugs, an welchem die erfindungsgemäße Vorrichtung festgelegt ist, gekoppelt sein, so daß entsprechend angepaßt an die Geschwindigkeit des Fahrzeugs auch eine optimierte und damit an den Einsatzzweck angepaßte, reduzierte Menge des auszubringenden Materials beispielsweise im wesentlichen automatisch bzw. selbsttätig erzielbar ist.

Für eine weitere Optimierung bei der Dosierung ist gemäß einer weiters bevorzugten Ausführungsform vorgesehen, daß jeder Verteileinrichtung ein getrennter Verschiebeantrieb zum Öffnen und Schließen der Austragsöffnung zugeordnet ist. Durch einen derartigen, jeweils getrennten Verschiebeantrieb läßt sich jeder einzelne Streuscheibenteil bzw. jede einzelne Verteileinrichtung getrennt ansteuern und es kann somit die durch jeweils eine Verteileinrichtung auszugebende Menge exakt entsprechend den Anforderungen dosiert werden.

Für eine zusätzliche Optimierung beim Ausbringen des riesel- bzw. streufähigen Materials entweder in Anpassung an unterschiedliche, örtliche Gegebenheiten und/oder in Anpassung an gegebenenfalls unterschiedliche Materialeigenschaften wird gemäß einer weiters bevorzugten Ausführungsform vorgeschlagen, daß die Verteileinrichtungen mit Wurfschaufeln ausgebildet sind, welche in ihrer Neigung und/oder Orientierung relativ zu einer radialen Richtungen der tellerförmigen Verteileinrichtungen verstellbar ausgebildet sind. Durch Verstellung der Neigung und/ oder Orientierung der Wurfschaufeln lassen sich beispielsweise die Arbeitsbreite und das Streubild variieren, welche mit der erfindungsgemäßen Vorrichtung überstrichen werden kann. In diesem Zusammenhang wird gemäß einer weiters bevorzugten Ausführungsform vorgeschlagen, daß die Neigung und/oder Orientierung der Wurfschaufeln automatisch, insbesondere in Abhängigkeit von der Geschwindigkeit des die Vorrichtung tragenden Fahrzeugs regel- bzw. steuerbar ist, so daß wiederum beispielsweise in Abhängigkeit von der bzw. Anpassung an die Geschwindigkeit des Fahrzeugs eine Optimierung des Materialeinsatzes erzielbar ist.

Das Streubild kann darüber hinaus für verschiedene Materialien und/oder Arbeitsbreiten durch Beeinflussung der relativen Lage zwischen der Austragsöffnung und insbesondere den Wurfschaufeln der Verteileinrichtungen optimiert werden, wobei in diesem Zusammenhang gemäß einer weiters bevorzugten Ausführungsform erfindungsgemäß vorgeschlagen wird, daß zwischen der Ausbringöffnung des Vorratsbehälters und der Verteileinrichtung eine Leiteinrichtung zur Aufbringung des auszubringenden Materials auf die Verteileinrichtung vorgesehen ist.

Die Erfindung wird nachfolgend anhand von in der beiliegenden Zeichnung schematisch dargestellten Ausführungsbeispielen näher erläutert. In dieser zeigen:
Fig. 1 eine schematische Ansicht einer erfindungsgemäßen Vorrichtung zum Ausbringen eines riesel- bzw. streufähigen Materials;
Fig. 2 eine Seitenansicht auf die erfindungsgemäße Vorrichtung entsprechend dem Pfeil II der Fig. 1, wobei Fig. 1 eine Ansicht entsprechend Pfeil I der Fig. 2 ist;
Fig. 3 eine Detailansicht der scheiben- bzw. tellerförmigen Verteileinrichtungen der Vorrichtung gemäß Fig. 1;
Fig. 4 in vergrößertem Maßstab eine Detailansicht des Teilbereichs IV der Fig. 3;
Fig. 5 in einer zu Fig. 4 ähnlichen Darstellung eine Detailansicht einer abgewandelten Ausführungsform einer Verteileinrichtung einer erfindungsgemäßen Vorrichtung;
Fig. 6 eine teilweise Draufsicht auf die Verteileinrichtung gemäß Fig. 5;
Fig. 7 ein schematisches Schaltungsdiagramm zum Betrieb der erfindungsgemäßen Vorrichtung;
Fig. 8 in einer wiederum zu Fig. 4 ähnlichen Darstellung eine Detailansicht einer weiteren, abgewandelten Ausführungsform einer Verteileinrichtung einer erfindungsgemäßen Vorrichtung;
Fig. 9 eine teilweise Draufsicht auf die Verteileinrichtung gemäß Fig. 8; und
Fig. 10 eine Draufsicht auf eine abgewandelte Ausführungsform einer erfindungsgemäßen Vorrichtung, wobei jeder Verteileinrichtung ein getrennter Verschiebeantrieb zugeordnet ist.

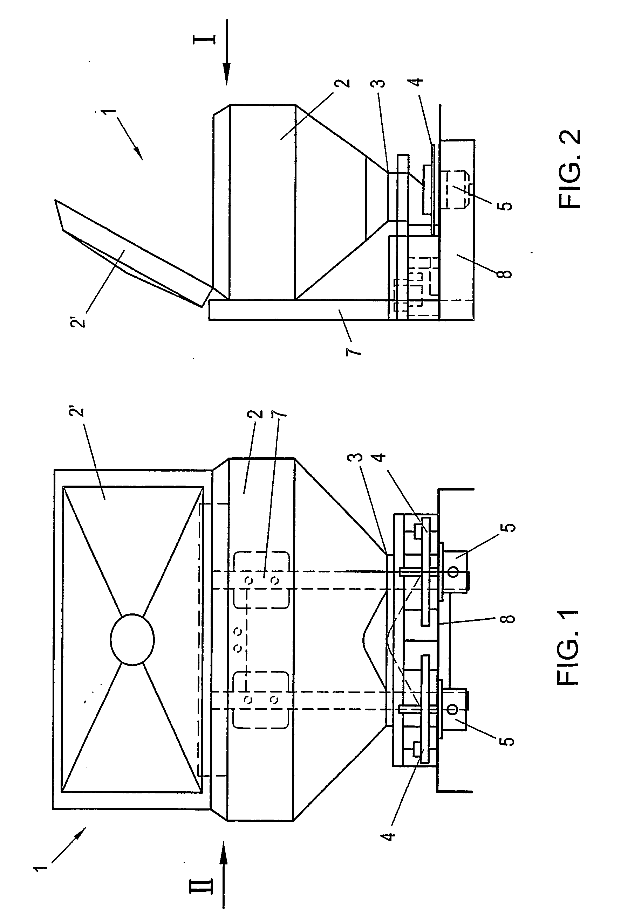

In Fig. 1 und 2 ist allgemein mit 1 eine Vorrichtung zum Ausbringen eines riesel- bzw. streufähigen Materials bezeichnet, wobei ein Vorratsbehälter 2 vorgesehen ist, welcher beispielsweise durch einen Deckel 2' abschließbar ist. Aus dem Vorratsbehälter 2 wird über schematisch angedeutete Austragsöffnungen 3 das Material jeweils zu einer scheiben- bzw. tellerartigen Verteileinrichtung 4 ausgebracht, welche nachfolgend im Detail näher erörtert werden. Jede der Verteileinrichtungen 4 wird über einen getrennten Antrieb, welcher von einem Elektromotor 5 gebildet ist, angetrieben, so daß die Verteileinrichtungen 4 jeweils im wesentlichen unabhängig voneinander zu einer Drehbewegung zum Ausbringen bzw. Verteilen des im Vorratsbehälter 2 enthaltenen, riesel- bzw. streufähigen Materials dienen.

Die Vorrichtung 1 ist über eine schematisch mit 7 und 8 angedeutete Tragvorrichtung an einem nicht näher dargestellten Fahrzeug festlegbar, um das im Vorratsbehälter 2 enthaltene Material bei einem Fahren des Fahrzeugs beispielsweise auf einem Feld oder dgl. zu verteilen.

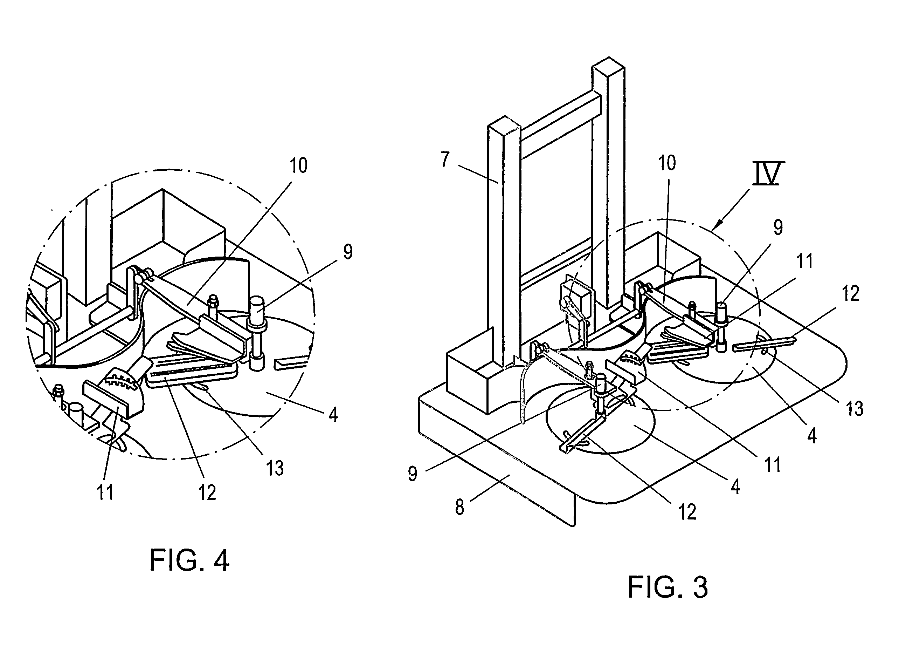

Bei den detaillierten Darstellungen gemäß Fig. 3 und 4 sind im wesentlichen die Teilbereiche der teller- bzw. scheibenförmigen Verteileinrichtungen 4 sowie einer Mehrzahl von Verstellmechanismen näher angedeutet. Wie aus Fig. 3 ersichtlich, sind zwei teller- bzw. scheibenförmige Verteileinrichtungen 4 nebeneinander vorgesehen, wobei eine Rotationsachse jeweils mit 9 angedeutet ist, wobei der Antrieb der Verteileinrichtungen 4, welcher jeweils von einem Elektromotor gebildet wird, nicht näher dargestellt ist.

Wie aus Fig. 3 und 4 ersichtlich, ist ein über einen Hebelmechanismus 10 betätigbarer Verschluß für die Austragsöffnung des nicht näher dargestellten Vorratsbehälters angedeutet, wobei ein Verschlußelement jeweils mit 11 bezeichnet ist. Zusätzlich sind an den tellerförmigen Verteileinrichtungen 4 jeweils eine Mehrzahl von Wurfschaufeln 12 vorgesehen, welche beispielsweise in den schematisch angedeuteten Langlöchern 13 verstellbar sind, so daß derart die Verteilleistung bzw. -qualität der Verteileinrichtungen 4 veränderbar ist.

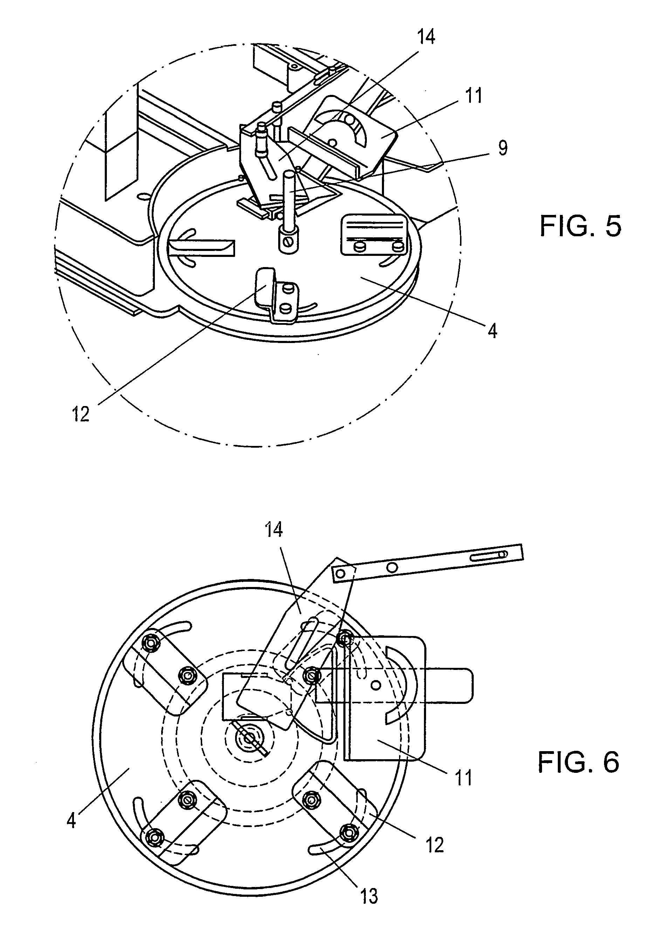

In Fig. 5 und 6 ist eine abgewandelte Ausführungsform einer scheiben- bzw. tellerartigen Verteileinrichtung 4 dargestellt, wobei wiederum ein Verschluß für eine nicht näher dargestellte Austragsöffnung mit 11 bezeichnet ist. Zusätzlich ist eine Leiteinrichtung 14 angedeutet, welche eine Neupositionierung bzw. Änderung der Positionierung des Auftreffpunkts des Materials auf die Verteileinrichtung 4 verändert.

In Fig. 5 und 6 sind ähnlich wie bei der Ausführungsform gemäß Fig. 4 verstellbare und wiederum mit 12 bezeichnete Auswurfschaufeln vorgesehen.

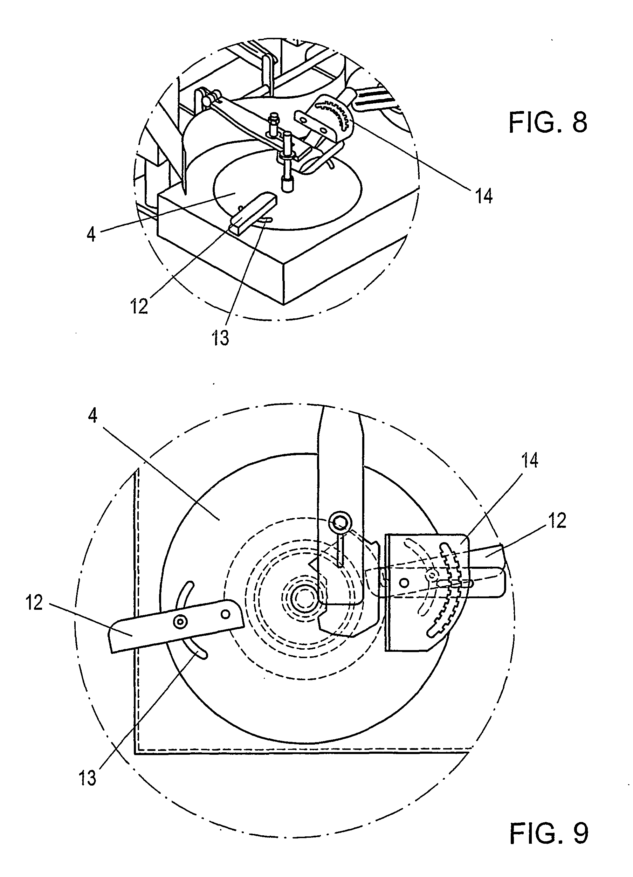

In Fig. 8 und 9 ist eine weitere, abgewandelte Ausführungsform einer scheiben- bzw. tellerartigen Verteileinrichtung 4 dargestellt, wobei eine Leiteinrichtung mit 14 bezeichnet ist. Im Gegensatz zu der Ausführungsform gemäß Fig. 5 und 6 sind lediglich zwei verstellbare Wurfschaufeln 12 vorgesehen, wobei Langlöcher 13 für eine Verstellung angedeutet sind. Durch eine derartige Verstellung der Wurfschaufeln 12 kann die Verteilleistung bzw. -qualität der gesamten Verteileinrichtung 4 durch Optimierung des Streubilds für verschiedene Materialien und/oder Arbeitsbreiten verändert werden.

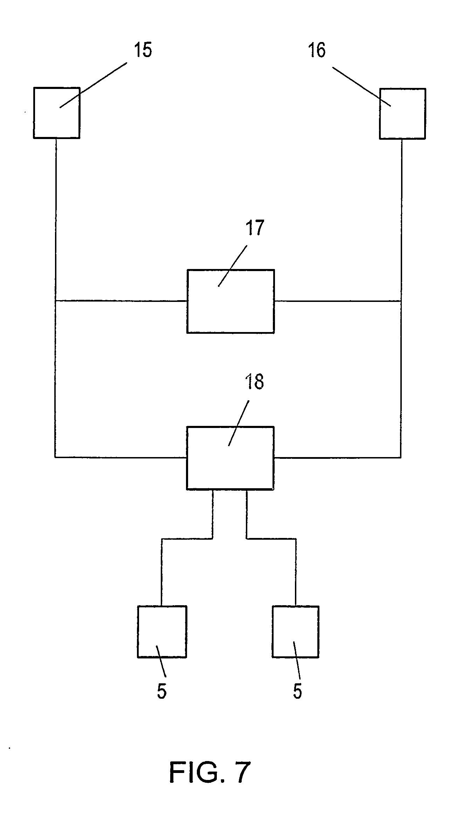

In dem schematischen Schaltungsdiagramm gemäß Fig. 7 sind ein Sensor 15 sowie ein Sensor 16 angedeutet, wobei der Sensor 15 zur Feststellung der angehobenen und abgesenkten Lage der Vorrichtung 1 an einem Fahrzeug dient, während über den Sensor 16 die Geschwindigkeit des die Vorrichtung 1 tragenden Fahrzeugs ermittelt werden kann. Wie in dem schematischen Diagramm gemäß Fig. 7 ersichtlich, sind beide Sensoren 15 und 16 sowohl mit einem Verschiebeantrieb 17 zur Betätigung des in den vorangehenden Figuren dargestellten Hebelmechanismus 10 zum Öffnen und Schließen der Austragsöffnung als auch mit einer Leistungszufuhr 18 gekoppelt bzw. koppelbar, wobei die Leistungszufuhr 18 mit den Elektromotoren 5 für die Verteileinrichtungen 4 gekoppelt ist. Es läßt sich somit in Abhängigkeit von der Einsatzlage der Vorrichtung 1 und/oder von der Geschwindigkeit des die Vorrichtung tragenden Fahrzeugs die Zufuhr des durch die Vorrichtung 1 auszubringenden, streu- bzw. rieselfähigen Materials regeln bzw. steuern und somit der Materialeinsatz beispielsweise im Hinblick auf eine Kostenreduzierung und -optimierung entsprechend reduzieren bzw. optimieren.

Bei Anordnung einer Vorrichtung 1 zum Ausbringen eines riesel- bzw. streufähigen Materials an einem entsprechend ausgerüsteten Zugfahrzeug, insbesondere einem Traktor, kann eine Ermittlung der angehobenen und abgesenkten Lage der Vorrichtung 1 sowie der Geschwindigkeit des die Vorrichtung tragenden Fahrzeugs anstelle einer Verwendung von getrennten Sensoren 15, 16, wie sie in Fig. 7 angedeutet sind, beispielsweise unmittelbar durch Übermittlung der entsprechenden Daten über einen sogenannten ISOBUS erfolgen, welcher eine standardisierte bzw. genormte Schnittstelle darstellt, über welche zumindest die für den Betrieb der vorliegenden Vorrichtung 1 erforderlichen Daten unmittelbar für eine weitere Regelung bzw. Steuerung einzelner Parameter der Vorrichtung 1 zur Verfügung gestellt werden können.

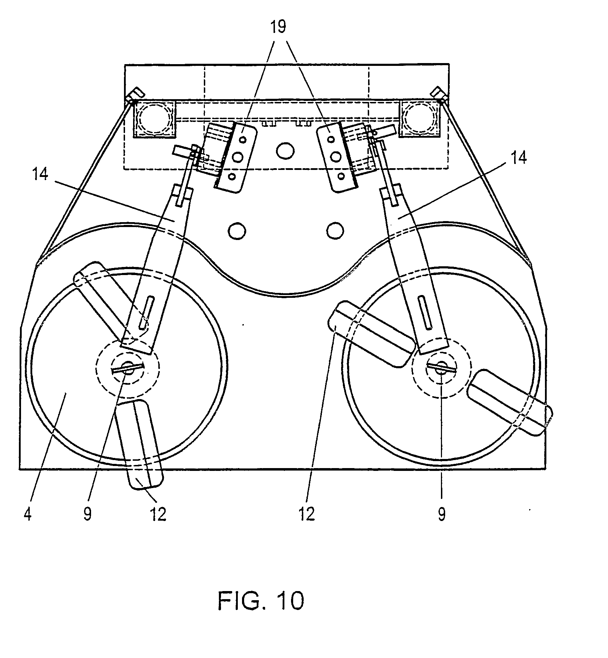

In der Darstellung gemäß Fig. 10 ist ersichtlich, daß jeweils einer wiederum mit 14 bezeichneten Leiteinrichtung ein getrennter Stellmotor bzw. Verschiebeantrieb 19 zugeordnet ist, so daß für die Verteileinrichtungen bzw. Streuteller 4 eine getrennte Dosierung des auszubringenden Materials entsprechend den Anforderungen vorgenommen werden kann. Gewünschtenfalls kann somit beispielsweise lediglich einer Verteileinrichtung 4 Material zugeführt werden, so daß entsprechend nur auf einer Seite das riesel- bzw. streufähige Material ausgebracht wird.

Im Zusammenhang mit der in Fig. 10 dargestellten, getrennten Anordnung von Verschiebeantrieben 19 läßt sich darüber hinaus unter Einsatz eines elektrischen bzw. elektronischen Steuermoduls, welches teilweise schematisch in Fig. 7 angedeutet ist, überprüfen, ob Durchflußöffnungen für das auszubringende Material zu den einzelnen Verteileinrichtungen 4 Verstopfungen aufweisen und/oder ob beispielsweise der Vorratsbehälter 2 leer ist.

Mit dem Steuermodul wird beispielsweise die Stromaufnahme gemessen und bei offenem und geschlossenem Schieber bzw. offener und geschlossener Leiteinrichtung 14 die Stromaufnahme ermittelt. Für eine Überprüfung der Funktionsfähigkeit kann untersucht werden, ob es einen meßbaren Unterschied in der Stromaufnahme zwischen einem Zustand eines Streuens und Nichtstreuens gibt, d.h. bei jeweiliger Stellung der Verschiebeantriebe 19 betreffend eine Öffnung oder ein Schließen der zugehörigen Austragsöffnung aus dem Behälter 2. Sollte während des Betriebs festgestellt werden, daß kein Unterschied mehr zwischen einer geöffneten und geschlossenen Lage der jeweiligen Austragsöffnung bzw. einer entsprechenden Lage der Leiteinrichtung 14 vorliegt, so kann beispielsweise eine Warnmeldung oder ein akustisches Signal ausgegeben werden, wobei dies darauf hinweist, daß entweder eine Verstopfung der Austragsöffnung aus dem Behälter 2 zu der jeweiligen Leiteinrichtung 14 bzw. der jeweiligen Verteileinrichtung 4 vorliegt oder gegebenenfalls der Behälter 2 leer ist.

## Patentansprüche

1. Vorrichtung zum Ausbringen eines riesel- bzw. streufähigen Materials, beispielsweise von Saatgut, Dünger, Salz, Ölbindemittel oder ähnlichen Granulaten, mit einem Vorratsbehälter, aus welchem das Material über wenigstens eine insbesondere verschließbare Austragsöffnung auf zwei scheiben- bzw. tellerartige Verteileinrichtungen (4), insbesondere unter Einfluß der Schwerkraft, ausbringbar ist, wobei die Verteileinrichtungen (4) zu einer rotierenden Bewegung durch wenigstens einen Elektromotor antreibbar sind, **dadurch gekennzeichnet, daß** die Verteileinrichtungen (4) jeweils mit einem getrennten, von einem Elektromotor (5) gebildeten Antrieb gekoppelt sind und daß die von jeweils einem Elektromotor (5) gebildeten Antriebe der Verteileinrichtungen (4) getrennt regel- bzw. steuerbar sind.

2. Vorrichtung nach Anspruch 1, **dadurch gekennzeichnet, daß** ein Sensor (15) zur Feststellung der angehobenen oder abgesenkten Lage der an einem Fahrzeug festgelegten Vorrichtung (1) vorgesehen ist, welcher mit einem Verschiebeantrieb (10) zum Öffnen und Schließen der Austragsöffnung (3) des Vorratsbehälters (2) und/oder einer Leistungszufuhr (18) zu den Elektromotoren (5) koppelbar ist.

3. Vorrichtung nach Anspruch 2, **dadurch gekennzeichnet, daß** jeder Verteileinrichtung (4) ein getrennter Verschiebeantrieb (19) zum Öffnen und Schließen der Austragsöffnung (3) zugeordnet ist.

4. Vorrichtung nach Anspruch 1, 2 oder 3, **dadurch gekennzeichnet, daß** ein Sensor (16) zur Feststellung der Geschwindigkeit des die Vorrichtung (1) tragenden Fahrzeugs vorgesehen ist, welcher mit einem Verschiebeantrieb (10) zum Öffnen und Schließen der Austragsöffnung (3) des Vorratsbehälters (2) und/oder einer Regelung der Drehzahl der Elektromotoren (5) der Verteileinrichtungen (4) koppelbar ist.

5. Vorrichtung nach einem der Ansprüche 1 bis 4, **dadurch gekennzeichnet, daß** die Verteileinrichtungen (4) mit Wurfschaufeln (12) ausgebildet sind, welche in ihrer Neigung und/oder Orientierung relativ zu einer radialen Richtungen der tellerförmigen Verteileinrichtungen (4) verstellbar ausgebildet sind.

6. Vorrichtung nach Anspruch 5, **dadurch gekennzeichnet, daß** die Neigung und/oder Orientierung der Wurfschaufeln (12) automatisch, insbesondere in Abhängigkeit von der Geschwindigkeit des die Vorrichtung (1) tragenden Fahrzeugs regel- bzw. steuerbar ist.

7. Vorrichtung nach einem der Ansprüche 1 bis 6, **dadurch gekennzeichnet, daß** zwischen der Ausbringöffnung (3) des Vorratsbehälters (2) und der Verteileinrichtung (4) eine Leiteinrichtung (14) zur Aufbringung des auszubringenden Materials auf die Verteileinrichtung (4) vorgesehen ist.

## Claims

1. Device for discharging a pourable or sprinkable material, for example seeds, fertilizer, salt, oil binding agents or similar granules, with a storage container, from which the material is dischargeable via at least one, especially closable discharge opening onto two disk-like or plate-like distribution devices (4) especially by gravitation, wherein the distribution devices (4) are driveable to a rotation via at least one electric motor, **characterized in that** the distribution devices (4) are each coupled with a separate driving unit formed by an electric motor (5) and that the driving units being formed by an electric motor (5) of the distribution devices (4) are separately controllable.

2. Device according to claim 1, **characterized in that** a sensor (15) is provided for ascertaining the raised or lowered position of the device (1) being mounted on a vehicle, being coupleable with a displacement drive unit (10) for opening and closing the discharge opening (3) of the storage container and/or a power supply (18) to the electric motors (5).

3. Device according to claim 2, **characterized in that** a separate displacement drive unit (10) for opening or closing the discharge opening (3) is assigned to each distribution device (4).

4. Device according to any of the claims 1, 2 or 3, **characterized in that** a sensor (16) is provided for ascertaining the velocity of the vehicle supporting the device (1) being coupleable with a displacement drive unit (10) for opening or closing the discharge opening (3) and/or a control device for the rotational speed of the electric motors (5) of the distribution devices (4).

5. Device according to any of the claims 1 to 4, **characterized in that** the distribution devices (4) are provided with impeller vanes (12) being adjustable in their inclination and/or orientation relative to a radial direction of the plate-like distribution devices (4).

6. Device according to claim 5, **characterized in that** the inclination and/or orientation of the impeller vanes (12) is automatically controllable, especially depending on the velocity of the vehicle supporting the device (1).

7. Device according to any of the claims 1 to 6, **characterized in that** a guiding device (14) for charging the dischargeable material onto the distribution device (4) is provided between the discharge opening (3) of the storage container (2) and the discharge device (4).

## Revendications

1. Dispositif pour épandre une matière apte à l'écoulement ou à la dispersion, par exemple des semences, engrais, sel, agglutineur d'huile ou granulats analogues, comprenant un réservoir à partir duquel la matière peut être épandue par l'intermédiaire d'au moins une ouverture de décharge, en particulier obturable, sur deux dispositifs d'épandage (4) en forme de disques ou de plateaux, en particulier sous l'effet de la pesanteur, les dispositifs d'épandage (4) étant entraînables en un mouvement rotatif par au moins un moteur électrique, **caractérisé en ce que** les dispositifs d'épandage (4) sont couplés chacun à une commande séparée, formée par un moteur électrique (5), et que les commandes des dispositifs d'épandage (4), formées chacune par un moteur électrique (5), sont réglables ou contrôlables séparément.

2. Dispositif suivant la revendication 1, **caractérisé en ce qu'**un capteur (15) est prévu pour détecter la position de relevage ou d'abaissement du dispositif (1) fixé sur un véhicule, lequel capteur peut être couplé à une commande de déplacement (10) pour l'ouverture et la fermeture de l'ouverture de décharge (3) du réservoir (2) et/ou d'une alimentation en puissance (18) des moteurs électriques (5).

3. Dispositif suivant la revendication 2, **caractérisé en ce qu'**une commande de déplacement séparée (19) pour l'ouverture et la fermeture de l'ouverture de décharge (3) est associée à chaque dispositif d'épandage (4).

4. Dispositif suivant l'une des revendications 1, 2 et 3, **caractérisé en ce qu'**un capteur (16) est prévu pour détecter la vitesse du véhicule supportant le dispositif (1), lequel capteur peut être couplé à une commande de déplacement (10) pour l'ouverture et la fermeture de l'ouverture de décharge (3) du réservoir (2) et/ou à une régulation de la vitesse de rotation des moteurs électriques (5) des dispositifs d'épandage (4).

5. Dispositif suivant l'une des revendications 1 à 4, **caractérisé en ce que** les dispositifs d'épandage (4) sont équipés de pelles basculantes (12), qui sont réalisées avec une possibilité de réglage dans leur inclinaison et/ou leur orientation par rapport à des directions radiales des dispositifs d'épandage (4) en forme de plateaux.

6. Dispositif suivant la revendication 5, **caractérisé en ce que** l'inclinaison et/ou l'orientation des pelles basculantes (12) est réglable ou contrôlable automatiquement, en particulier en fonction de la vitesse du véhicule supportant le dispositif (1).

7. Dispositif suivant l'une des revendications 1 à 6, **caractérisé en ce qu'**il est prévu, entre l'ouverture de décharge (3) du réservoir (2) et le dispositif d'épandage (4), un déflecteur (14) pour épandre la matière sur le dispositif d'épandage (4).
